# FASCICULE DE BREVET EUROPEEN

(11) **EP 3 541 637 B1**
(45) Date de publication et mention de la délivrance du brevet: **09.09.2020**
(21) Numéro de dépôt: 17801085.6
(22) Date de dépôt: 09.11.2017
(51) Int. Cl.: B60C 9/20, B60C 9/22

(54) **ARMATURE DE FRETTAGE D'UN PNEUMATIQUE POUR VEHICULE LOURD DE TYPE GENIE CIVIL**
UMREIFUNGSVERSTÄRKUNG FÜR EINEN REIFEN EINES SCHWERLASTBAUFAHRZEUGS
HOOPING REINFORCEMENT FOR A TYRE OF A HEAVY DUTY CIVIL ENGINEERING VEHICLE

(30) Priorité: 21.11.2016 FR 1661292
(43) Date de publication de la demande: 25.09.2019
(73) Titulaire: Compagnie Générale des Etablissements Michelin, 63000 Clermont-Ferrand (FR)
(72) Inventeur: DOMINGO, Alain, 63040 Clermont-Ferrand Cedex 9 (FR); LE CHENADEC, Elodie, 63040 Clermont-Ferrand Cedex 9 (FR)
(74) Mandataire: Lasson, Cédric Yves
(86) Numéro de dépôt international: PCT/FR2017/053056
(87) Numéro de publication internationale: WO 2018/091802

(56) Documents cités:
- WO-A1-2016/139348
- JP-A- S5 647 304

## Description

La présente invention a pour objet un pneumatique radial, destiné à équiper un véhicule lourd de type génie civil, et concerne plus particulièrement l'armature de sommet d'un tel pneumatique.

Typiquement un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un matériau polymérique de type élastomère ou élastomérique appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au moins égaux à 15° et au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'intérieur de l'armature de travail et radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut également être radialement positionnée entre deux couches de travail de l'armature de travail, ou radialement à l'extérieur de l'armature de travail.

L'armature de frettage comprend au moins une couche de frettage et usuellement deux couches de frettage, radialement superposées, formées de renforts métalliques, parallèles entre eux, en formant, avec la direction circonférentielle, des angles au plus égaux à 2.5°, et, de préférence voisins de 0°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa.

Un renfort métallique non extensible est caractérisé par un allongement total At, sous une force de traction égale 10% de la force à rupture Fm, au plus égal à 0.2%. Par ailleurs, un renfort métallique non extensible a un module élastique en extension compris usuellement entre 150 GPa et 200 GPa.

Le document WO 2016139348 décrit une architecture de pneumatique pour véhicule lourd de génie civil telle que précédemment décrite et comprenant une armature de frettage formée par un enroulement circonférentiel d'une nappe comprenant des renforts métalliques élastiques circonférentiels faisant, avec la direction circonférentielle des angles au plus égaux à 2.5°, ledit enroulement circonférentiel de la nappe s'étendant depuis une première extrémité circonférentielle jusqu'à une deuxième extrémité circonférentielle radialement extérieure à la première extrémité circonférentielle, de façon à former un empilement radial d'au moins deux couches de frettage, l'armature de frettage étant radialement positionnée entre les deux couches de travail d'une armature de travail.

L'armature de frettage telle que décrite dans ce document se caractérise en outre par des renforts ayant une force à rupture au moins égale à 800 daN. Sa largeur axiale est inférieure à la moitié de la largeur axiale du pneumatique.

Lors de la fabrication d'un pneumatique tel que décrit par le document WO 2016139348, la nappe comprenant des renforts métalliques élastiques, dite nappe de renforts métalliques, destinée à constituer l'armature de frettage est initialement stockée sur un rouleau. Puis elle est déroulée et posée par enroulement circonférentiel radialement à l'extérieur des couches de pneumatique déjà empilées radialement. La nappe de renforts métalliques est enroulée sur au moins deux tours de façon à réaliser au moins deux couches de frettage radialement superposées, avec un décalage circonférentiel entre l'extrémité de départ de l'enroulement et l'extrémité de fin de l'enroulement de telle sorte que, sur une distance circonférentielle limitée, ou longueur de recouvrement, l'armature de frettage comprend trois couches de frettage. L'enroulement est réalisé de façon continue en utilisant une unique portion de nappe de renforts métalliques. Ainsi l'armature de frettage ne contient aucune discontinuité. Il s'ensuit qu'il peut subsister une portion de nappe de renforts métalliques, sur le rouleau de stockage initial, inutilisable dès lors qu'elle n'a pas une longueur suffisante pour la réalisation de l'armature de frettage en un seul morceau. Cette portion résiduelle de nappe de renforts métalliques, inutilisable en fabrication pour cause de longueur insuffisante, est également appelée chute de nappe. L'existence de telles chutes de nappes, qui entraîne une perte de matière, pénalise le coût de fabrication du pneumatique.

Les inventeurs se sont donnés pour objectif de diminuer le coût de fabrication d'un pneumatique pour véhicule lourd de génie civil, et, en particulier, celui de son armature de frettage, tout en garantissant le même niveau de performance en endurance de son sommet.

Cet objectif a été atteint par un pneumatique pour véhicule lourd de type génie civil comprenant :
- une armature de sommet, radialement intérieure à une bande de roulement et radialement extérieure à une armature de carcasse;
- l'armature de sommet comprenant une armature de protection, une armature de travail et une armature de frettage;
- l'armature de protection, la plus radialement extérieure dans l'armature de sommet, comprenant au moins une couche de protection, la couche de protection comprenant des renforts métalliques formant, avec une direction circonférentielle XX' tangente à la circonférence du pneumatique, un angle au moins égal à 10° ;

- l'armature de travail comprenant au moins deux couches de travail, chaque couche de travail comprenant des renforts métalliques formant, avec la direction circonférentielle XX', un angle au moins égal à 15° et au plus égal à 45° et croisés d'une couche de travail à la suivante ;
- l'armature de frettage comprenant au moins deux couches de frettage, chaque couche de frettage comprenant des renforts métalliques, enrobés par un matériau élastomérique d'enrobage et formant, avec la direction circonférentielle XX', un angle au plus égal à 2.5° ;
- chaque couche de frettage étant constituée par un enroulement circonférentiel annulaire, selon la direction circonférentielle XX', d'au moins une portion de nappe de renforts métalliques, s'étendant depuis une extrémité initiale jusqu'à une extrémité finale, de telle sorte que la couche de frettage comprend au moins une discontinuité ;
- toute discontinuité d'une première couche de frettage étant positionnée circonférentiellement de façon à former avec toute discontinuité d'une deuxième couche de frettage un angle au moins égal à 90° ;
- une couche de frettage comprenant une première et une deuxième discontinuités ; et les première et deuxième discontinuités de la couche de frettage sont respectivement positionnées circonférentiellement de façon à former entre elles un angle au moins égal à 90°.

Selon l'invention, chaque couche de frettage comprend au moins une discontinuité délimitée par ses extrémités respectivement initiale et finale.

Pour la réalisation de l'armature de frettage, la nappe de renforts métalliques est enroulée une première fois autour de la première couche de travail déjà posée. A la fin de l'enroulement, les deux extrémités de la nappe de renforts métalliques sont en vis-à-vis. L'espace entre ces deux extrémités forme une discontinuité qui est remplie d'un mélange élastomérique de liaison qui solidarise par soudure les deux extrémités de la nappe de renforts métalliques. On parle ici de soudure bout à bout en ce sens qu'il n'y a pas de recouvrement entre les deux portions de nappe. Ensuite, une seconde nappe de renforts métalliques est enroulée autour de la première couche de frettage et est raccordée suivant le même principe de soudure bout à bout. Des chutes de nappes de renforts métalliques peuvent être utilisées pour réaliser la deuxième couche de frettage. Quoi qu'il en soit, toute coïncidence des raccords des nappes de renforts métalliques est évitée en décalant suffisamment les discontinuités. Dans l'état de l'art, il est connu que les soudures des nappes de renforts métalliques se font suivant des coupures parallèles aux renforts métalliques sans sectionner les renforts. Dans le cas de l'invention, les renforts métalliques destinés à être posés circonférentiellement sont sectionnés et pour cela, il est nécessaire d'avoir un procédé de coupe adapté, capable de sectionner les renforts métalliques ayant un gros diamètre typiquement de l'ordre de 3.8 mm. Cette coupure doit être suffisamment nette pour éviter tout défoisonnement des fils métalliques constituant les renforts, c'est-à-dire tout écartement des extrémités de fils les unes par rapport aux autres. Ce défoisonnement pourrait créer des fissures dans le matériau élastomérique d'enrobage, soit dans un plan méridien, soit dans un plan circonférentiel, susceptibles d'entraîner l'endommagement du pneumatique.

Encore selon l'invention, les discontinuités respectives de deux couches de frettage successives doivent être suffisamment éloignées les unes des autres, selon la direction circonférentielle, afin d'éviter de fragiliser le pneumatique en endurance, et afin de maîtriser son uniformité. Ce qui correspond à une distance circonférentielle minimale égale à 2590 mm dans le cas d'un rayon de pose de l'armature de frettage égal à 1648 mm.

Toujours afin d'éviter de fragiliser le pneumatique en endurance, et afin de maîtriser son uniformité, les discontinuités à l'intérieur d'une même couche de frettage doivent être suffisamment éloignées les unes des autres. L'écart angulaire minimal retenu entre deux discontinuités est au moins égal à 90°, ce qui par exemple, pour un rayon de pose de l'armature de frettage égal à 1648 mm, correspond à une distance circonférentielle minimale entre les discontinuités égale à 2590 mm.

Cette variante correspond à l'utilisation d'au moins deux portions de nappe de renforts métalliques pour la réalisation d'une même couche de frettage, dans le cas d'une utilisation de chutes de nappe. Le nombre maximal de chutes de nappe pouvant être utilisé est fonction de la circonférence du pneumatique, et de la contrainte de distance entre les discontinuités selon la direction circonférentielle.

Avantageusement toute discontinuité a une ligne moyenne rectiligne formant, avec la direction circonférentielle, un angle D strictement inférieur à 90°, de préférence au moins égal à 15° et au plus égal à 45° et encore plus préférentiellement au moins égal à 25° et au plus égal à 40°.

L'orientation oblique de la discontinuité par rapport à la direction circonférentielle répond à la nécessité d'éviter de concentrer les extrémités des renforts métalliques sectionnés dans un même plan méridien. Au niveau des extrémités des renforts métalliques, les déformations du mélange élastomérique d'enrobage sont maximales en amplitude et peuvent entraîner des fissurations à la fois dans le plan méridien, entraînant une séparation des couches de travail dans la direction axiale, et également des fissurations dans la direction circonférentielle le long des renforts métalliques. Par exemple, la discontinuité est orientée de manière à faire un angle de 30° par rapport à la direction circonférentielle.

Au niveau géométrique, toute discontinuité a avantageusement une largeur LD au moins égale à 10 mm et au plus égale à 90 mm, et de préférence au plus égale à 70 mm.

Le raccord des portions de nappe se réalise en rapprochant les deux extrémités à raccorder jusqu'à une distance LD qui représente la largeur de la soudure. Cette largeur doit être comprise entre 10 mm et 90 mm avec une valeur à viser de 70 mm. Au-delà d'une largeur égale à 90 mm, en fabrication, la soudure peut s'ouvrir lors des phases de conformation qui entraîne des augmentations significatives du diamètre de pose de l'armature de frettage.

Concernant le matériau, toute discontinuité est constituée par un matériau élastomérique de remplissage ayant un module de cisaillement dynamique G_{R}* au moins égal au module de cisaillement dynamique G_{E}* du matériau élastomérique d'enrobage des renforts métalliques de l'armature de frettage.

Tout matériau élastomérique de remplissage peut être utilisé sous réserve d'être au moins aussi rigide que le matériau élastomérique d'enrobage. En outre, le matériau élastomérique de remplissage doit être compatible avec la fonction d'enrobage, par exemple, avoir des propriétés d'adhésion à cru aux renforts métalliques adaptées.

Selon un mode de réalisation préféré du matériau, toute discontinuité est constituée par un matériau élastomérique de remplissage ayant une composition identique à celle du matériau élastomérique d'enrobage des renforts métalliques de l'armature de frettage.

Afin d'optimiser le coût de réalisation de la soudure, le matériau élastomérique de remplissage qui solidarise les deux extrémités des portions de nappes peut être le matériau élastomérique d'enrobage.

En ce qui concerne l'architecture de l'armature de sommet, l'armature de frettage est avantageusement radialement comprise entre deux couches de travail de l'armature de travail.

En effet, une telle architecture permet, grâce à l'utilisation de renforts circonférentiels, situés près de la fibre neutre du sommet, de limiter la déformation du sommet aux épaules. Ceci permet donc d'obtenir à la fois la performance d'endurance au clivage du sommet attendue et la performance de résistance aux chocs visée grâce à un sommet souple au centre apte à supporter la déformation due aux chocs lorsque le véhicule roule sur des obstacles. En effet, lors du franchissement d'un obstacle, le sommet du pneumatique fonctionne comme une poutre dont la fibre neutre se situe entre les couches de travail selon un mode de déformation imposée. La fibre neutre en flexion de l'armature de sommet se situe entre les couches de sommet les plus rigides, à savoir entre les couches de travail. En positionnant les renforts circonférentiels entre ces dites couches de travail, la solution minimise les contraintes et les déformations de flexion associées à cette sollicitation que doivent supporter les renforts circonférentiels.

Les renforts métalliques de l'armature de frettage sont préférentiellement élastiques.

Le taux de conformation en un point donné de l'armature de frettage est égal au rapport du rayon R dudit point sur le pneumatique conformé et vulcanisé sur le rayon R0 du même point sur le pneumatique non conformé, R et R0 étant mesurés par rapport à l'axe de rotation du pneumatique. En se positionnant sur l'armature de frettage à l'intersection avec le plan équatorial, le ratio de variation relative de rayons (R-R0)/R0 représente l'allongement circonférentiel maximal repris par les renforts métalliques dû au procédé de fabrication. Lors de la conformation du pneumatique, les renforts élastiques s'allongent suivant le taux de conformation appliqué puis retrouvent leur position d'équilibre sans ouverture de la soudure en fin de conformation. Si les taux de conformation varient de 0.5 % à 1 %, la soudure est robuste et ne s'ouvre pas.

Encore plus préférentiellement, les renforts métalliques de l'armature de frettage sont des câbles multi-torons de structure 1xN comprenant une unique couche de N torons enroulés en hélice, chaque toron comprenant une couche interne de M fils internes enroulés en hélice et une couche externe de P fils externes enroulés en hélice autour de la couche interne.

Selon un premier mode de réalisation des câbles multi-torons, N=3 ou N=4, de préférence N=4. Préférentiellement, le renfort est défini avec 4 torons, mais l'option avec 3 torons est également convenable.

Selon un deuxième mode de réalisation des câbles multi-torons, M=3, 4 ou 5, de préférence M=3.

Selon un troisième mode de réalisation des câbles multi-torons, dans lequel P=7, 8, 9, 10 ou 11, de préférence P=8.

Ces renforts sont conçus pour obtenir de forts allongements sous de faibles charges en sollicitations d'extension. Le choix préférentiel conduit à des renforts du type : 4x(3+8)x0.35, soit des câbles de 44 fils avec un diamètre unitaire de chaque fil de 35 centièmes de millimètre. L'utilisation de tels renforts améliorent l'endurance des pneumatiques en augmentant la résistance aux efforts de traction lors du passage sur des obstacles.

Son utilisation peut être étendue aux couches de protection, ce qui permet de supporter les déformations locales imposées lors du roulage sur des obstacles. A titre d'exemple, les câbles multi-torons de type 4x(3+8)x0.35, soit des câbles de 44 fils avec un diamètre unitaire de chaque fil de 35 centième de millimètre. Ces renforts ont un diamètre au moins égal à 3 mm et une force à rupture au moins égale à 800 daN. La valeur élevée du diamètre permet d'absorber les déformations de cisaillement de la couche de protection sur une plus grande épaisseur ce qui génère des contraintes de cisaillement plus faibles. La valeur élevée de la force à rupture permet au renfort de supporter des contraintes de rupture plus élevées améliorant ainsi la performance du sommet en endurance aux chocs. Enfin, l'élasticité de ces renforts en phase de fabrication favorise l'expansion du diamètre de pose qu'implique la cuisson des pneumatiques dans un moule.

L'utilisation des mêmes renforts pour les armatures de frettage et de protection participe à une logique de standardisation des constituants du pneumatique favorable pour baisser les coûts de fabrication sans altérer les performances du produit, et les performances du procédé.

En ce qui concerne l'armature de protection, les renforts métalliques de couche de protection forment, avec la direction circonférentielle, un angle au moins égal à 15° et au plus égal à 40°.

L'armature de protection comprend usuellement deux couches de protection dont les renforts métalliques respectifs sont croisés d'une couche de protection à la suivante.

L'invention a également pour objet un procédé fabrication d'un pneumatique tel que précédemment décrit, et, plus spécifiquement, l'étape de réalisation de son armature de frettage.

Le procédé de fabrication d'un pneumatique pour véhicule lourd de type génie civil selon l'une quelconque des caractéristiques précédemment décrites comprend une étape de réalisation de l'armature de frettage dans laquelle chaque couche de frettage est obtenue par un enroulement circonférentiel annulaire d'au moins une portion de nappe de renforts métalliques, constituée par des renforts métalliques parallèles entre eux et enrobés par un matériau élastomérique d'enrobage, et par soudure bout à bout des extrémités adjacentes de deux portions de nappes successives, chaque soudure bout à bout constituant une discontinuité constituée par un matériau élastomérique de remplissage.

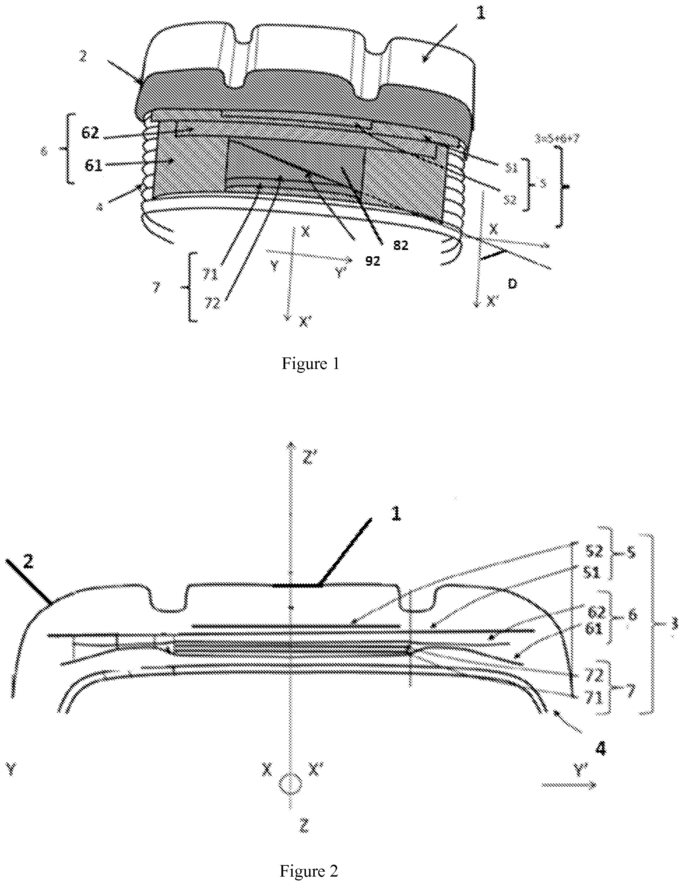

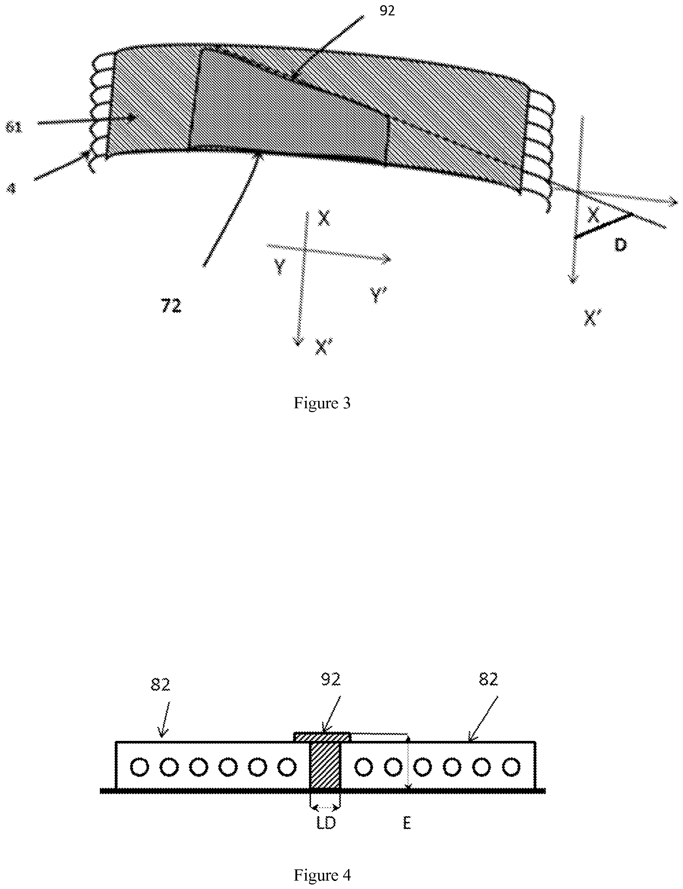

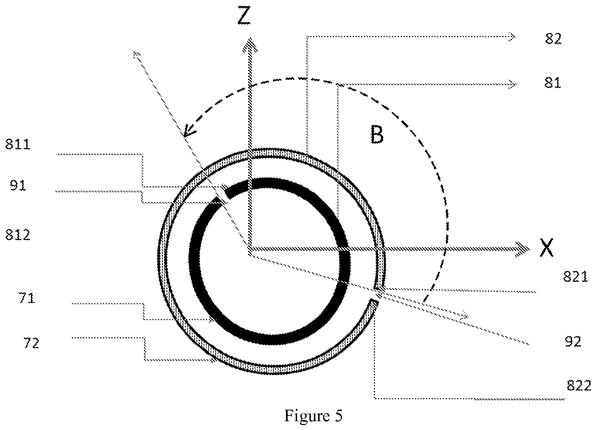

L'invention est illustrée par les figures 1 à 6, non représentées à l'échelle pour en faciliter la compréhension :

La figure1 présente une vue écorchée en perspective du sommet d'un pneumatique 1 selon l'art antérieur présentant :
- une bande de roulement 2, radialement extérieure à une armature de carcasse 4,
- l'armature de sommet 3 comprenant une armature de protection 5, une armature de travail 6 et une armature de frettage 7,
- l'armature de protection 5, la plus radialement extérieure dans l'armature de sommet 3, comprenant deux couches de protection (51, 52), chaque couche de protection (51, 52) comprenant des renforts métalliques formant, avec une direction circonférentielle (XX') tangente à la circonférence du pneumatique, un angle au moins égal à 10°,
- l'armature de travail 6 comprenant deux couches de travail (61, 62), chaque couche de travail (61, 62) comprenant des renforts métalliques formant, avec la direction circonférentielle (XX'), un angle au moins égal à 15° et au plus égal à 45°et croisés d'une couche de travail à la suivante,
- l'armature de frettage 7 étant constituée par un enroulement circonférentiel, selon la direction circonférentielle (XX'), d'une nappe de renforts métalliques 8, s'étendant depuis une extrémité initiale radialement intérieure 81 jusqu'à une extrémité finale radialement extérieure 82, en formant une spirale, de telle sorte que l'armature de frettage 7 comprend au moins deux couches de frettage (71, 72).

La figure 2 représente une coupe méridienne du sommet d'un pneumatique 1 selon l'invention présentant :
- une bande de roulement 2;
- une armature de carcasse 4;
- une armature de sommet 3 comprenant une armature de travail 5 comprenant deux couches de travail 51 et 52, une armature de frettage 7 comprenant un enroulement de deux tours de renforts circonférentiels 71 et 72, et une armature de protection 6 comprenant deux couches de protection 61 et 62 ;

La figure 3 représente une discontinuité 92 de la couche de frettage 72 dont la ligne moyenne forme un angle D avec la direction circonférentielle XX'. La couche de frettage 72 est radialement extérieure à la couche de travail 61, qui est elle-même radialement extérieure à l'armature de carcasse 4.

La figure 4 montre le raccordement de la discontinuité 92 entre deux portions de nappes de renforts métalliques 82. Ce raccordement, réalisé par un matériau élastomérique d'enrobage, est caractérisé par sa largeur LD au moins égale à 10 mm et au plus égale à 90 mm, et par son épaisseur E qui est au moins égale à celle de la nappe de renforts métalliques.

La figure 5 représente le schéma de principe de la fabrication de l'armature de frettage par la superposition de deux couches de frettage 71 et 72:
- Pour la réalisation de la première couche de frettage 71, radialement la plus intérieure, l'enroulement annulaire d'une portion de nappe de renforts métalliques commence à partir d'une extrémité initiale 811, et se termine au niveau d'une deuxième extrémité finale 812 en vis-à-vis de l'extrémité initiale 811. Les deux extrémités forment une discontinuité 91 de la couche de frettage 71 ;
- Pour la réalisation de la deuxième couche de frettage 72, radialement la plus extérieure, une deuxième portion de nappe de renforts métalliques est enroulée en anneau et superposée à la première couche de frettage 71 en raccordant respectivement deux extrémités initiale 821 et finale 822 de façon à former une discontinuité 92. ;
- Les deux discontinuités 91 et 92 sont positionnées circonférentiellement de manière à former entre elles un angle B au moins égal à 90°.

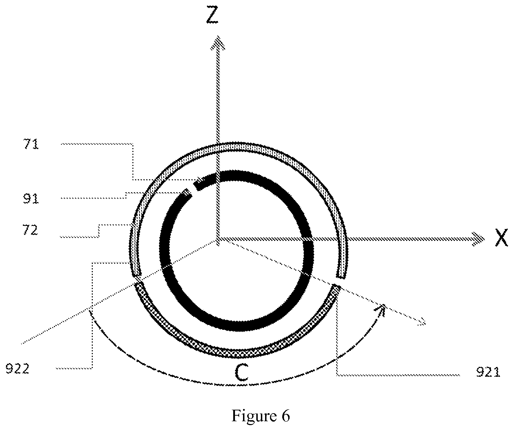

La figure 6 représente l'invention dans laquelle la deuxième couche de frettage 72 est réalisée par enroulement annulaire de deux portions de nappes métalliques séparées par deux discontinuités 921 et 922 formant entre elles, selon la direction circonférentielle, un angle C au moins égale à 90°. Lors de la réalisation de la deuxième couche de frettage 72, des chutes de nappe de renforts métalliques peuvent ainsi être utilisées sous réserve de respecter la contrainte de distance minimale entre discontinuités.

L'invention a été réalisée sur un pneumatique pour véhicule lourd de génie civil de dimension 40.00R57. Le pneumatique selon l'invention diffère du pneumatique de l'état de référence par la réalisation de l'armature de frettage. Alors que le pneumatique de l'état de référence a été obtenu par un enroulement continu en spirale d'une nappe de renforts métalliques sur deux tours, tel que décrit dans le document de l'état de la technique WO 2016139348, chaque couche de frettage de l'armature de frettage du pneumatique selon l'invention a été réalisée par l'enroulement annulaire d'une nappe de renforts métallique sur un tour. Pour la première couche de frettage, les deux extrémités de la nappe de renforts métalliques sont raccordées par une soudure bout à bout. Puis on superpose une deuxième couche de frettage obtenue par l'enroulement annulaire d'une nappe de renforts métalliques sur la première couche de frettage. Cette deuxième couche de frettage est éventuellement constituée d'une succession de portions de nappes de renforts métalliques reliées entre elles par des soudures bout à bout.

Parmi les résultats avantageux obtenus, on peut citer :
- Lors de la phase de moulage du pneumatique, la suppression des soufflures liées à la présence d'air emprisonné par l'armature de frettage en spirale. Il s'ensuit une qualité de production améliorée avec moins de rejet pour défaut de fabrication ;
- La suppression des longueurs de recouvrement des nappes de renforts métalliques de l'armature de frettage de l'état de l'art se traduit par un gain sur le coût de revient industriel du pneumatique ;
- La suppression des longueurs de recouvrement se traduit par une amélioration des performances en lien avec l'uniformité du pneumatique résultant de la suppression des surépaisseurs locales;
- Ces améliorations apportées par l'invention permettent d'obtenir des performances d'endurance du même niveau que celles du pneumatique de l'état de la technique.

## Revendications

1. Pneumatique (1) pour véhicule lourd de type génie civil comprenant une armature de sommet (3), radialement intérieure à une bande de roulement (2) et radialement extérieure à une armature de carcasse (4),
- l'armature de sommet (3) comprenant une armature de protection (5), une armature de travail (6) et une armature de frettage (7),
- l'armature de protection (5), la plus radialement extérieure dans l'armature de sommet (3), comprenant au moins une couche de protection (51, 52), la couche de protection (51, 52) comprenant des renforts métalliques formant, avec une direction circonférentielle (XX') tangente à la circonférence du pneumatique, un angle au moins égal à 10°,
- l'armature de travail (6) comprenant au moins deux couches de travail (61, 62), chaque couche de travail (61, 62) comprenant des renforts métalliques formant, avec la direction circonférentielle (XX'), un angle au moins égal à 15° et au plus égal à 45°et croisés d'une couche de travail à la suivante,
- l'armature de frettage (7) comprenant au moins deux couches de frettage (71, 72), chaque couche de frettage (71, 72) comprenant des renforts métalliques, enrobés par un matériau élastomérique d'enrobage et formant, avec la direction circonférentielle (XX'), un angle au plus égal à 2.5°,
**caractérisé en ce que** chaque couche de frettage (71, 72) est constituée par un enroulement circonférentiel annulaire, selon la direction circonférentielle (XX'), d'au moins une portion de nappe de renforts métalliques (81, 82), s'étendant depuis une extrémité initiale (811, 821) jusqu'à une extrémité finale (812, 822), de telle sorte que la couche de frettage (71, 72) comprend au moins une discontinuité (91, 92), **et en ce que** toute discontinuité (91) d'une première couche de frettage (71) est positionnée circonférentiellement de façon à former avec toute discontinuité (92) d'une deuxième couche de frettage (72) un angle B au moins égal à 90°, et **en ce que** une couche de frettage (72) comprenant une première et une deuxième discontinuités (921, 922) dans lequel les première et deuxième discontinuités (921, 922) de la couche de frettage (72) sont respectivement positionnées circonférentiellement de façon à former entre elles un angle C au moins égal à 90°.

2. Pneumatique (1) pour véhicule lourd de type génie civil selon la revendication 1, **dans lequel** toute discontinuité (9) a une ligne moyenne rectiligne formant, avec la direction circonférentielle (XX'), un angle D strictement inférieur à 90°, de préférence au moins égal à 15° et au plus égal à 45° et encore plus préférentiellement au moins égal à 25° et au plus égal à 40°.

3. Pneumatique (1) pour véhicule lourd de type génie civil selon l'une quelconque des revendications 1 à 2, **dans lequel** toute discontinuité (9) a une largeur LD au moins égale à 10 mm et au plus égale à 90 mm, et de préférence au plus égale à 70 mm.

4. Pneumatique (1) pour véhicule lourd de type génie civil selon l'une quelconque des revendications 1 à 3, **dans lequel** toute discontinuité (9) est constituée par un matériau élastomérique de remplissage ayant un module de cisaillement dynamique G_{R}* au moins égal au module de cisaillement dynamique G_{E}* du matériau élastomérique d'enrobage des renforts métalliques de l'armature de frettage (7).

5. Pneumatique (1) pour véhicule lourd de type génie civil selon l'une quelconque des revendications 1 à 4, **dans lequel** toute discontinuité (9) est constituée par un matériau élastomérique de remplissage ayant une composition identique à celle du matériau élastomérique d'enrobage des renforts métalliques de l'armature de frettage (7).

6. Pneumatique (1) pour véhicule lourd de type génie civil selon l'une quelconque des revendications 1 à 5, **dans lequel** l'armature de frettage (7) est radialement comprise entre deux couches de travail (61, 62) de l'armature de travail (6).

7. Pneumatique (1) pour véhicule lourd de type génie civil selon l'une des revendications 1 à 6, **dans lequel** les renforts métalliques de l'armature de frettage (7) sont élastiques.

8. Pneumatique (1) pour véhicule lourd de type génie civil selon la revendication 7, **dans lequel** les renforts métalliques élastiques de l'armature de frettage (7) sont des câbles multitorons de structure 1xN comprenant une unique couche de N torons enroulés en hélice, chaque toron comprenant une couche interne de M fils internes enroulés en hélice et une couche externe de P fils externes enroulés en hélice autour de la couche interne.

9. Pneumatique (1) pour véhicule lourd de type génie civil selon la revendication 8, dans **lequel** N=3 ou N=4, de préférence N=4.

10. Pneumatique (1) pour véhicule lourd de type génie civil selon l'une des revendications 8 ou 9, **dans lequel** M=3, 4 ou 5, de préférence M=3.

11. Pneumatique (1) pour véhicule lourd de type génie civil selon l'une quelconque des revendications 8 à 10, **dans lequel** dans lequel P=7, 8, 9, 10 ou 11, de préférence P=8.

12. Procédé de fabrication d'un pneumatique (1) pour véhicule lourd de type génie civil selon l'une quelconque des revendications 1 à 11, comprenant une étape de réalisation de l'armature de frettage (7) dans laquelle chaque couche de frettage (71, 72) est obtenue par un enroulement circonférentiel annulaire d'au moins une portion de nappe de renforts métalliques (81, 82), constituée par des renforts métalliques parallèles entre eux et enrobés par un matériau élastomérique d'enrobage, et par soudure bout à bout des extrémités adjacentes de deux portions de nappes successives, chaque soudure bout à bout constituant une discontinuité constituée par un matériau élastomérique de remplissage.

## Patentansprüche

1. Reifen (1) für ein Schwerlastbaufahrzeug, welcher eine Scheitelbewehrung (3) radial innerhalb eines Laufstreifens (2) und radial außerhalb einer Karkassenbewehrung (4) umfasst,
- wobei die Scheitelbewehrung (3) eine Schutzbewehrung (5), eine Arbeitsbewehrung (6) und eine Umhüllungsbewehrung (7) umfasst,
- wobei die Schutzbewehrung (5), die sich in der Scheitelbewehrung (3) radial am weitesten außen befindet, wenigstens eine Schutzschicht (51, 52) umfasst, wobei die Schutzschicht (51, 52) metallische Verstärkungselemente umfasst, die mit einer zum Umfang des Reifens tangentialen Umfangsrichtung (XX') einen Winkel von mindestens 10° bilden,
- wobei die Arbeitsbewehrung (6) wenigstens zwei Arbeitsschichten (61, 62) umfasst, wobei jede Arbeitsschicht (61, 62) metallische Verstärkungselemente umfasst, die mit der Umfangsrichtung (XX') einen Winkel von mindestens 15° und höchstens 45° bilden und sich von einer Arbeitsschicht zur folgenden überkreuzen,
- wobei die Umhüllungsbewehrung (7) wenigstens zwei Umhüllungsschichten (71, 72) umfasst, wobei jede Umhüllungsschicht (71, 22) metallische Verstärkungselemente umfasst, die in ein elastomeres Einbettungsmaterial eingebettet sind und mit der Umfangsrichtung (XX') einen Winkel von höchstens 2,5° bilden,
**dadurch gekennzeichnet, dass** jede Umhüllungsschicht (71, 72) aus einer ringförmigen Umfangswicklung, in der Umfangsrichtung (XX'), wenigstens eines Abschnitts einer Lage aus metallischen Verstärkungselementen (81, 82) besteht, der sich von einem Anfangsende (811, 821) bis zu einem Abschlussende (812, 822) erstreckt, derart, dass die Umhüllungsschicht (71, 72) wenigstens eine Diskontinuität (91, 92) umfasst, und dadurch, dass jede Diskontinuität (91) einer ersten Umhüllungsschicht (71) in Umfangsrichtung so positioniert ist, dass sie mit jeder Diskontinuität (92) einer zweiten Umhüllungsschicht (72) einen Winkel B von mindestens 90° bildet, und dadurch, dass eine Umhüllungsschicht (72) eine erste und eine zweite Diskontinuität (921, 922) aufweist, wobei die erste und die zweite Diskontinuität (921, 922) der Umhüllungsschicht (72) jeweils in Umfangsrichtung so positioniert sind, dass sie miteinander einen Winkel C von mindestens 90° bilden.

2. Reifen (1) für ein Schwerlastbaufahrzeug nach Anspruch 1, wobei jede Diskontinuität (9) eine geradlinige Mittellinie aufweist, die mit der Umfangsrichtung (XX') einen Winkel D bildet, der streng kleiner als 90°, vorzugsweise mindestens gleich 15° und höchstens gleich 45° und noch stärker bevorzugt mindestens gleich 25° und höchstens gleich 40° ist.

3. Reifen (1) für ein Schwerlastbaufahrzeug nach einem der Ansprüche 1 bis 2, wobei jede Diskontinuität (9) eine Breite LD von mindestens 10 mm und höchstens 90 mm und vorzugsweise von höchstens 70 mm aufweist.

4. Reifen (1) für ein Schwerlastbaufahrzeug nach einem der Ansprüche 1 bis 3, wobei jede Diskontinuität (9) aus einem elastomeren Füllmaterial besteht, das einen dynamischen Schubmodul G_{R}* aufweist, der mindestens gleich dem dynamischen Schubmodul G_{E}* des elastomeren Einbettungsmaterials der metallischen Verstärkungselemente der Umhüllungsbewehrung (7) ist.

5. Reifen (1) für ein Schwerlastbaufahrzeug nach einem der Ansprüche 1 bis 4, wobei jede Diskontinuität (9) aus einem elastomeren Füllmaterial besteht, das eine Zusammensetzung aufweist, die mit derjenigen des elastomeren Einbettungsmaterials der metallischen Verstärkungselemente der Umhüllungsbewehrung (7) identisch ist.

6. Reifen (1) für ein Schwerlastbaufahrzeug nach einem der Ansprüche 1 bis 5, wobei sich die Umhüllungsbewehrung (7) radial zwischen zwei Arbeitsschichten (61, 62) der Arbeitsbewehrung (6) befindet.

7. Reifen (1) für ein Schwerlastbaufahrzeug nach einem der Ansprüche 1 bis 6, wobei die metallischen Verstärkungselemente der Umhüllungsbewehrung (7) elastisch sind.

8. Reifen (1) für ein Schwerlastbaufahrzeug nach Anspruch 7, wobei die elastischen metallischen Verstärkungselemente der Umhüllungsbewehrung (7) mehrlitzige Seile mit einer Struktur 1xN sind, die eine einzige Schicht aus N spiralförmig gewickelten Litzen umfasst, wobei jede Litze eine innere Schicht aus M spiralförmig gewickelten inneren Drähten und eine äußere Schicht aus P spiralförmig um die innere Schicht gewickelten äußeren Drähten umfasst.

9. Reifen (1) für ein Schwerlastbaufahrzeug nach Anspruch 8, wobei N = 3 oder N = 4 und vorzugsweise N = 4 ist.

10. Reifen (1) für ein Schwerlastbaufahrzeug nach Anspruch 8 oder 9, wobei M = 3, 4 oder 5 und vorzugsweise M = 3 ist.

11. Reifen (1) für ein Schwerlastbaufahrzeug nach einem der Ansprüche 8 bis 10, wobei P = 7, 8, 9, 10 oder 11 und vorzugsweise P = 8 ist.

12. Verfahren zur Herstellung eines Reifens (1) für ein Schwerlastbaufahrzeug nach einem der Ansprüche 1 bis 11, welches einen Schritt der Herstellung der Umhüllungsbewehrung (7) umfasst, in welchem jede Umhüllungsschicht (71, 72) durch eine ringförmige Umfangswicklung wenigstens eines Abschnitts einer Lage aus metallischen Verstärkungselementen (81, 82), der aus zueinander parallelen und in ein elastomeres Einbettungsmaterial eingebetteten metallischen Verstärkungselementen besteht, und durch Stumpfschweißung der benachbarten Enden von zwei Abschnitten aufeinander folgender Lagen erhalten wird, wobei jede Stumpfschweißung eine Diskontinuität darstellt, die aus einem elastomeren Füllmaterial besteht.

## Claims

1. Tyre (1) for a heavy vehicle of construction plant type, comprising a crown reinforcement (3) radially on the inside of a tread (2) and radially on the outside of a carcass reinforcement (4),
- the crown reinforcement (3) comprising a protective reinforcement (5), a working reinforcement (6) and a hoop reinforcement (7),
- the protective reinforcement (5), which is radially outermost in the crown reinforcement (3), comprising at least one protective layer (51, 52), the protective layer (51, 52) comprising metallic reinforcers that form an angle at least equal to 10° with a circumferential direction (XX') tangential to the circumference of the tyre,
- the working reinforcement (6) comprising at least two working layers (61, 62), each working layer (61, 62) comprising metallic reinforcers that form an angle at least equal to 15° and at most equal to 45° with the circumferential direction (XX') and are crossed from one working layer to the next,
- the hoop reinforcement (7) comprising at least two hooping layers (71, 72), each hooping layer (71, 72) comprising metallic reinforcers that are coated in an elastomeric coating material and form an angle at most equal to 2.5° with the circumferential direction (XX'),
**characterized in that** each hooping layer (71, 72) is formed by a circumferential winding in a ring, in the circumferential direction (XX'), of at least one portion of a ply of metallic reinforcers (81, 82), extending from an initial end (811, 821) to a final end (812, 822), such that the hooping layer (71, 72) comprises at least one discontinuity (91, 92), **and in that** any discontinuity (91) in a first hooping layer (71) is positioned circumferentially so as to form an angle B at least equal to 90°, **and in that** a hooping layer (72) comprising a first discontinuity (921) and a second discontinuity (922), wherein the first and second discontinuities (921, 922) in the hooping layer (72) are respectively positioned circumferentially so as to form an angle C at least equal to 90° between one another.

2. Tyre (1) for a heavy vehicle of construction plant type according to Claims 1, wherein any discontinuity (9) has a rectilinear mean line that forms an angle D strictly less than 90°, preferably at least equal to 15° and at most equal to 45°, and even more preferably at least equal to 25° and at most equal to 40°.

3. Tyre (1) for a heavy vehicle of construction plant type according to any one of Claims 1 to 2, **wherein** any discontinuity (9) has a width LD at least equal to 10 mm and at most equal to 90 mm, preferably at most equal to 70 mm.

4. Tyre (1) for a heavy vehicle of construction plant type according to any one of Claims 1 to 3, **wherein** any discontinuity (9) is formed by an elastomeric filling material having a dynamic shear modulus G_{R}* at least equal to the dynamic shear modulus G_{E}* of the elastomeric coating material of the metallic reinforcers of the hoop reinforcement (7).

5. Tyre (1) for a heavy vehicle of construction plant type according to any one of Claims 1 to 4, **wherein** any discontinuity (9) is formed by an elastomeric filling material having a composition identical to that of the elastomeric coating material of the metallic reinforcers of the hoop reinforcement (7).

6. Tyre (1) for a heavy vehicle of construction plant type according to any one of Claims 1 to 5, **wherein** the hoop reinforcement (7) is radially comprised between two working layers (61, 62) of the working reinforcement (6).

7. Tyre (1) for a heavy vehicle of construction plant type according to one of Claims 1 to 6, **wherein** the metallic reinforcers of the hoop reinforcement (7) are elastic.

8. Tyre (1) for a heavy vehicle of construction plant type according to Claim 7, **wherein** the elastic metallic reinforcers of the hoop reinforcement (7) are multistrand ropes of structure 1xN, comprising a single layer of N strands wound in a helix, each strand comprising an internal layer of M internal threads wound in a helix and an external layer of P external threads wound in a helix around the internal layer.

9. Tyre (1) for a heavy vehicle of construction plant type according to Claim 8, wherein N=3 or N=4, preferably N=4.

10. Tyre (1) for a heavy vehicle of construction plant type according to either of Claims 8 and 9, **wherein** M=3, 4 or 5, preferably M=3.

11. Tyre (1) for a heavy vehicle of construction plant type according to any one of Claims 8 to 10, wherein wherein P=7, 8, 9, 10 or 11, preferably P=8.

12. Method for manufacturing a tyre (1) for a heavy vehicle of construction plant type according to any one of Claims 1 to 11, comprising a step of producing the hoop reinforcement (7), in which each hooping layer (71, 72) is obtained by circumferentially winding in a ring at least one portion of a ply of metallic reinforcers (81, 82), which is made up of mutually parallel metallic reinforcers coated in an elastomeric coating material, and by butt welding the adjacent ends of two successive ply portions, each butt weld forming a discontinuity formed by an elastomeric filling material.
